# EUROPÄISCHE PATENTSCHRIFT

(11) **EP 1 236 626 B1**
(45) Veröffentlichungstag und Bekanntmachung des Hinweises auf die Patenterteilung: **28.07.2004**
(21) Anmeldenummer: 01129339.6
(22) Anmeldetag: 17.12.2001
(51) Int. Cl.: B60R 25/02

(54) **Schloss, insbesondere zum Verriegeln der Lenkspindel eines Kraftfahrzeugs**
Lock in particular for locking a motor vehicle steering column
Verrou notamment pour le verrouillage de la colonne de direction d'un véhicule à moteur

(30) Priorität: 28.02.2001 DE 10109609
(43) Veröffentlichungstag der Anmeldung: 04.09.2002
(73) Patentinhaber: HUF HÜLSBECK & FÜRST GMBH & CO. KG, 42551 Velbert (DE)
(72) Erfinder: Zillmann, Horst, 81243 München (DE)
(74) Vertreter: Oedekoven, Wolf-Dieter, Dipl.-Ing.

(56) Entgegenhaltungen:
- WO-A-03/042014
- DE-C- 4 436 326
- DE-C- 19 961 975

## Beschreibung

Die Erfindung bezieht sich auf ein Schloß, insbesondere zum Verriegeln der Lenkspindel eins Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes oder eines mit dem Sperrglied zusammenwirkenden Betätigungsgliedes in der einen oder in der anderen Richtung, wobei das Steuerglied das Sperrglied oder dessen Betätigungsglied umschließt und zwei innere Schrägflächen aufweist, welche mit zwei einander bezüglich der Drehachse des Steuergliedes diametral gegenüberliegenden, radialen Vorsprüngen des Sperrgliedes oder des Betätigungsgliedes desselben zusammenwirken und jeweils an den beiden Enden in je eine Endfläche übergehen, die in einer zur Drehachse des Steuergliedes senkrechten Ebene liegt.

Aus der DE-C-4 436 326 ist ein Schloß dieser Gattung bekannt, bei welchem das Sperrglied stets nur genau bis in die Verriegelungsstellung oder in die Entriegelungsstellung und nicht weiter laufen kann, auch dann nicht, wenn sich das Steuerglied danach noch weiter dreht, sein Antrieb also nicht augenblicklich stillsteht, sobald das Sperrglied die Verriegelungstellung oder die Entriegelungsstellung erreicht hat. Das Sperrglied oder dessen Betätigungsglied und das Steuerglied sind koaxial angeordnet und wirken über die beiden radialen Vorsprünge des inneren Sperrgliedes oder des inneren Betätigungsgliedes desselben, welche einander bezüglich der Drehachse des Steuergliedes diametral gegenüberliegen und aufeinander ausgerichtet sind und welche jeweils senkrecht zur Drehachse des Steuergliedes beweglich sowie federbelastet sind, und über die beiden inneren Schrägflächen des äußeren Steuergliedes sowie eine Endfläche der einen Schrägfläche und die entsprechende Endfläche der anderen Schrägfläche, welche in derselben zur Drehachse des Steuergliedes senkrechten Ebene liegen und sich jeweils bis neben die andere oder die eine Schrägfläche erstrecken, derart zusammen, daß das Sperrglied oder dessen Betätigungssglied beim Drehen des Steuergliedes in derjenigen Richtung, in welcher die Vorsprünge auf den Schrägflächen zu den Endflächen hinlaufen, entsprechend axial verschoben wird, um dann, wenn die Vorsprünge von den Schrägflächen auf die Endflächen übergehen, stillzustehen und in der erreichten Axialstellung zu bleiben, bis das Steuerglied in der entgegengesetzten Richtung gedreht wird und die Vorsprünge auf den Schrägflächen von den Endflächen weg laufen, so daß das Sperrglied oder dessen Betätigungsglied sich in der entgegengesetzten Richtung axial verschiebt, bis die Vorsprünge von den Schrägflächen auf deren andere beiden Endflächen übergehen, welche sich ebenfalls in ein und derselben, zur Drehachse des Steuergliedes senkrechten Ebene erstrecken. Die Vorsprünge des Sperrgliedes oder des Betätigungsgliedes desselben können von zwei Stiften gebildet sein, welche in einer gemeinsamen Querbohrung des Sperrgliedes oder des Betätigungsgliedes desselben angeordnet und durch eine gemeinsame Schraubendruckfeder belastet sind.

Bekannt ist auch ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes in der einen oder in der anderen Richtung, wobei das Steuerglied das Sperrglied umschließt und ein Innengewinde aufweist, welches mit einem bezüglich der Drehachse des Steuergliedes radialen Vorsprung des Sperrgliedes zusammenwirkt und an den beiden Enden in je eine Endfläche übergeht, die in einer zur Drehachse des Steuergliedes senkrechten Ebene liegt. Der Vorsprung des Sperrgliedes ist von einem Querstift gebildet, der in einer Querbohrung des Sperrgliedes axial verschieblich ist. Jede Endfläche des Innengewindes des Steuergliedes ist von einer derart verlaufenden Seitenflanke begrenzt, daß der Querstift nach dem beim Drehen des Steuergliedes in der entsprechenden Richtung erfolgten Übergang auf die Endfläche auf derselben bleibt, auch wenn das Steuerglied in derselben Richtung weitergedreht wird, und erst dann die Endfläche verläßt und wieder mit einem aus dem Sperrglied ragenden Ende in das Innengewinde eintritt, wenn das Steuerglied in der entgegengesetzten Richtung gedreht wird ( DE-C-199 61 975 ).

Der Erfindung liegt die Aufgabe zugrunde, die bekannten Schlösser weiter zu verbessern und insbesondere die Anzahl der Bauteile noch weiter zu verringern, die Montage noch weiter zu vereinfachen und die Herstellungskosten noch weiter zu senken.

Diese Aufgabe ist durch die im kennzeichnenden Teil des Patentanspruchs 1 angegebenen Merkmale gelöst. Vorteilhafte Ausgestaltungen des erfindungsgemäßen Schlosses sind in den restlichen Patentansprüchen angegeben.

Nachstehend ist eine Ausführungsform des erfindungsgemäßen Schlosses anhand von Zeichnungen beispielsweise beschrieben. Darin zeigt:
**Fig. 1** die Draufsicht in Richtung des Pfeils I in Fig. 2 bei abgenommenem Deckel im Verriegelungszustand;
**Fig. 2** den Längsschnitt entlang der Linie II - II in Fig. 1;
**Fig. 3** den Längsschnitt entlang der Linie III - III in Fig. 2;
**Fig. 4** den Längsschnitt gemäß Fig. 2, wobei das Sperrglied sich in einer Verriegelungswartestellung befindet;
**Fig. 5** den Längsschnitt entlang der Linie V - V in Fig. 4;
**Fig. 6** die Draufsicht gemäß Fig. 1 im Entriegelungszustand;
**Fig. 7** den Längsschnitt entlang der Linie VII - VII in Fig. 6;
**Fig. 8** den Längsschnitt entlang der Linie VIII - VIII in Fig. 7;
**Fig. 9** den Längsschnitt entlang der Linie IX - IX in Fig. 6;
**Fig. 10** eine Draufsicht auf das Steuerglied;
**Fig. 11** den Längsschnitt entlang der Linie XI - XI in Fig. 10;
**Fig. 12** den Längsschnitt entlang der Linie XII - XII in Fig. 10.

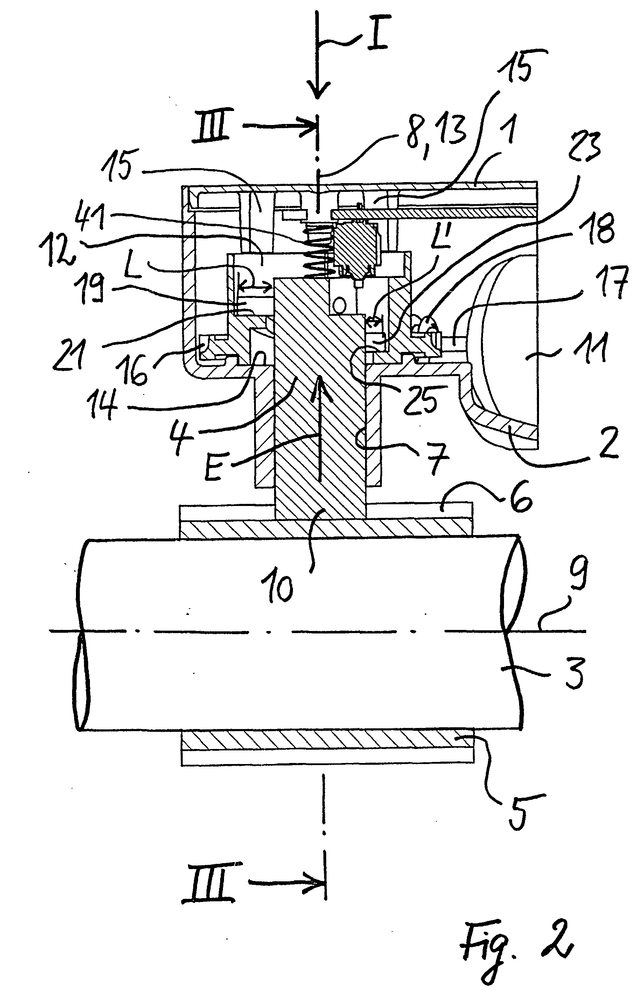

Das dargestellte Schloß mit einem durch einen Deckel 1 verschlossenen Gehäuse 2 dient zum Verriegeln der in Fig. 2 bis 5 gezeigten Lenkspindel 3 eines Kraftfahrzeugs mittels eines Sperrgliedes 4, welches mit einer auf der Lenkspindel 3 befestigten Sperrhülse 5 mit Sperrnuten 6 zusammenwirkt. Die Lenkspindel 3 und die Sperrhülse 5 sind von einem nicht dargestellten Mantelrohr umschlossen, auf welchem das Gehäuse 2 befestigt ist. Das Sperrglied 4 ist als Bolzen mit rechteckigem Querschnitt ausgebildet und in einem Kanal 7 entsprechenden Querschnitts des Gehäuses 2 axial verschieblich gelagert, dessen Längsachse 8 die Längsachse 9 der Lenkspindel 3 rechtwinklig schneidet.

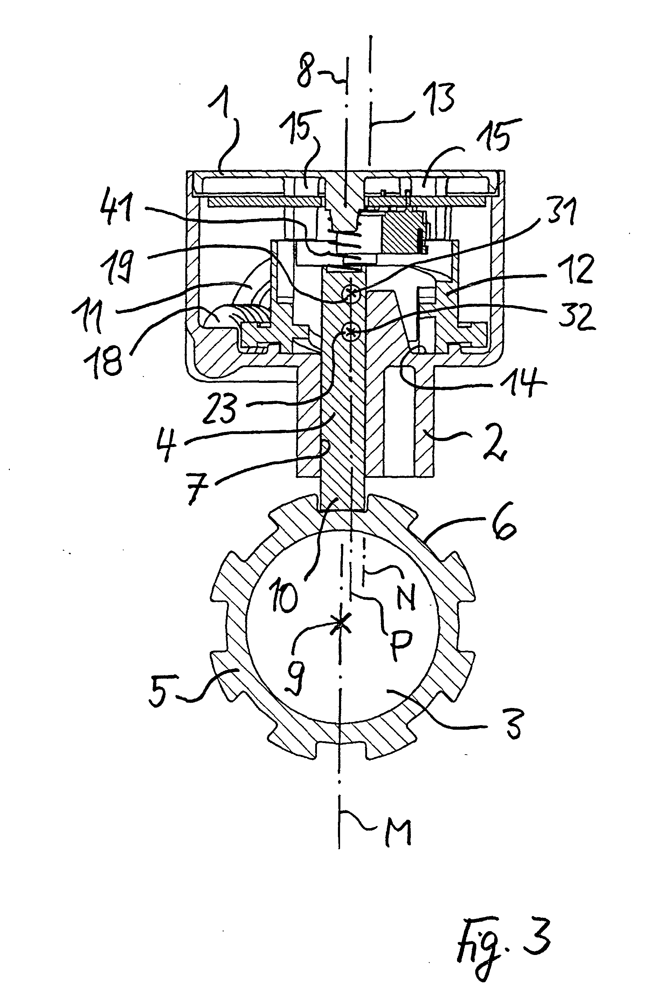

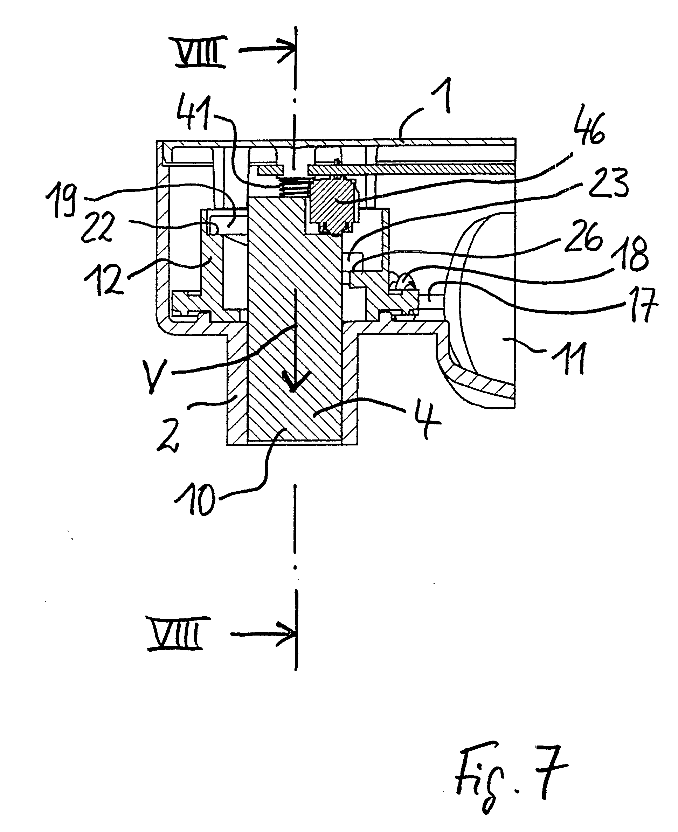

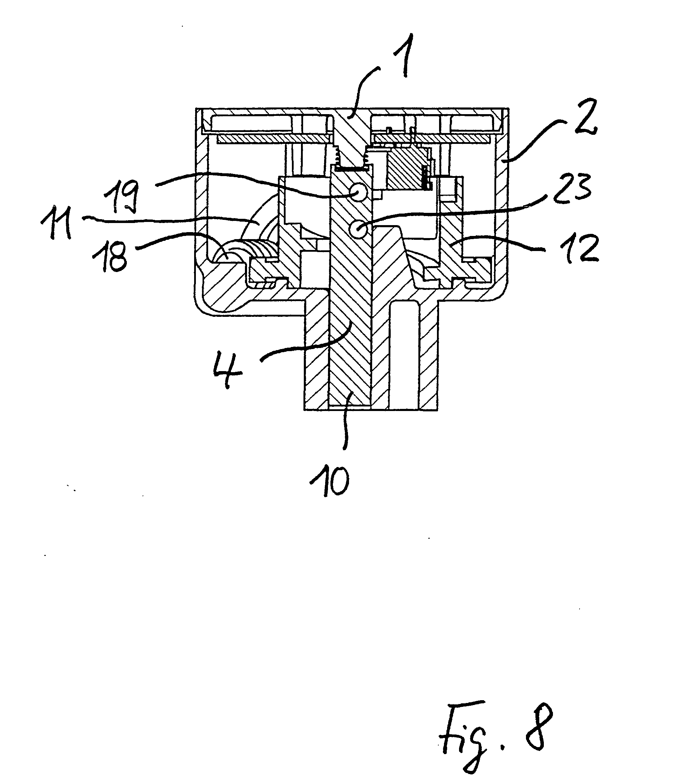

Das Sperrglied 4 ist zwischen der aus Fig. 2 und 3 ersichtlichen Verriegelungsstellung, in welcher es mit seinem der Lenkspindel 3 benachbarten Ende 10 in eine Sperrnut 6 der Sperrhülse 5 eingreift, so daß die Lenkspindel 3 nicht mehr gedreht werden kann, und der aus Fig. 7 bis 9 ersichtlichen Entriegelungsstellung hin- und herbewegbar, in welcher das Sperrglied 4 mit seinem Ende 10 in keine Sperrnut 6 der Sperrhülse 5 eingreift und die Lenkspindel 3 freigibt, so daß sie gedreht werden kann.

Zur Axialverschiebung des Sperrgliedes 4 in die Entriegelungsstellung und in der entgegengesetzten Richtung in die Verriegelungsstellung ist ein mittels eines Elektromotors 11 mit umkehrbarer Drehrichtung hin- und herdrehbares Steuerglied 12 vorgesehen. Das Steuerglied 12 ist im wesentlichen koaxial zum Sperrglied 4 angeordnet und umgibt das Sperrglied 4, ist im Gehäuse 2 um eine gemäß Fig. 3 in einer zu der die Längsachse 8 des Sperrglied-Kanals 7 und die Längsachse 9 der Lenkspindel 3 enthaltenden Ebene M parallelen Ebene N parallel zur Längsachse 8 des Sperrglied - Kanals 7 verlaufende Achse 13 zwischen einer zu dieser Achse 13 koaxialen Ringfläche 14 des Gehäuses 2 und einem zu dieser Achse 13 koaxialen Kranz von Innenvorsprüngen 15 des Deckels 1 drehbar gelagert und ist als hülsenförmiges Schneckenrad mit einer Außenverzahnung 16 ausgebildet, in welche eine auf der Ausgangswelle 17 des Elektromotors 11 befestigte Antriebsschnecke 18 eingreift. Beim Elektromotor 11 kann es sich um einen Zwölf-Volt-Gleichstrommotor handeln, dessen Drehrichtung durch Umpolen umgekehrt werden kann und welcher dann stillsteht, wenn er stromlos ist.

Das innere Sperrglied 4 ist mit einem ersten äußeren Vorsprung 19 versehen, mit welchem eine erste innere Schrägfläche 20 sowie eine erste innere Endfläche 21 und eine zweite innere Endfläche 22 des äußeren Steuergliedes 12 zusammenwirken. Außerdem weist das innere Sperrglied 4 einen zweiten äußeren Vorsprung 23 auf, mit dem eine zweite innere Schrägfläche 24 sowie eine dritte innere Endfläche 25 und eine vierte innere Endfläche 26 des äußeren Steuergliedes 12 zusammenwirken.

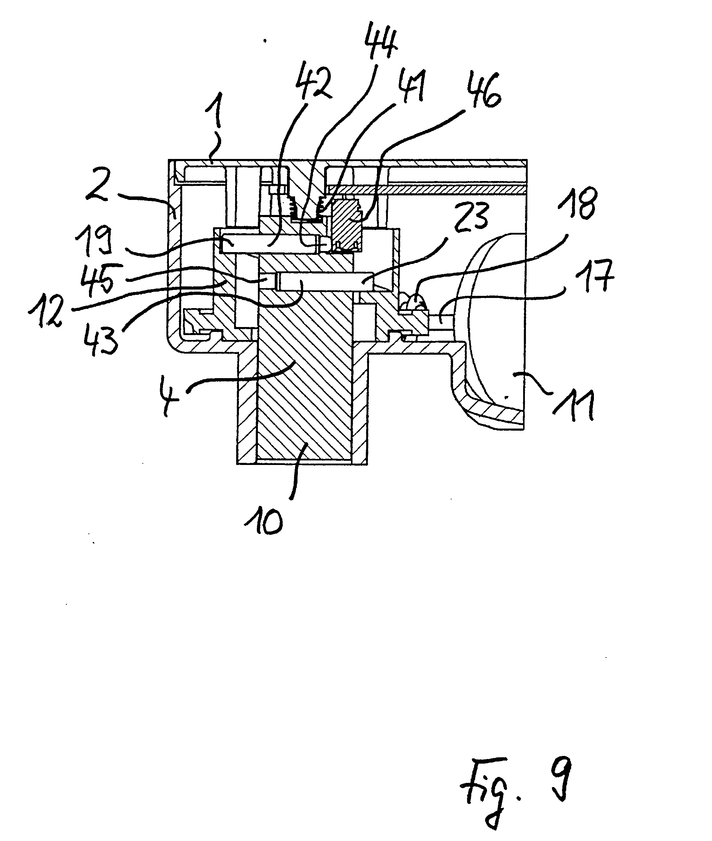

Wie besonders deutlich aus Fig. 10 bis 12 ersichtlich, geht die erste Schrägfläche 20 des Steuergliedes 12 an ihrem einen Ende 27 in die erste Endfläche 21 und an ihrem anderen Ende 28 in die zweite Endfläche 22 über und setzt sich die zweite Schrägfläche 24 des Steuergliedes 12 an ihren beiden Enden 29, 30 jeweils in der dritten Endfläche 25 bzw. in der vierten Endfläche 26 fort. Die erste Schrägfläche 20 und die zweite Schrägfläche 24 des Steuergliedes 12 weisen dieselbe Steigung auf. Die Endflächen 21, 22, 25, 26 liegen jeweils in einer zur Drehachse 13 des Steuergliedes 12 senkrechten Ebene.

Die erste Schrägfläche 20 des Steuergliedes 12 und die erste Endfläche 21 sowie die zweite Endfläche 22 sind gegenüber der zweiten Schrägfläche 24 des Steuergliedes 12 und der dritten Endfläche 25 sowie der vierten Endfläche 26 in Richtung der Drehachse 13 des Steuergliedes 12 um die Strecke H versetzt und erstrecken sich in einem Abstand A um die Drehachse 13 des Steuergliedes 12 herum, der größer ist als der Abstand A', in welchem sich die zweite Schrägfläche 24 des Steuergliedes 12 und die dritte Endfläche 25 sowie die vierte Endfläche 26 um die Drehachse 13 des Steuergliedes 12 herum erstrecken.

Der erste Vorsprung 19 und der zweite Vorsprung 23 des Sperrgliedes 4 stehen jeweils im wesentlichen radial bezüglich der Drehachse 13 des Steuergliedes 12 vom Sperrglied 4 ab, und zwar auf einander in Bezug auf die Drehachse 13 des Steuergliedes 12 diametral gegenüberliegenden Seiten. Der erste Vorsprung 19 ist gegenüber dem zweiten Vorsprung 23 des Sperrgliedes 4 genau so weit und in derselben Richtung entlang der Drehachse 13 des Steuergliedes 12 versetzt, wie die erste Schrägfläche 20 des Steuergliedes 12 und die erste Endfläche 21 sowie die zweite Endfläche 22 gegenüber der zweiten Schrägfläche 24 des Steuergliedes 12 und der dritten Endfläche 25 sowie der vierten Endfläche 26, nämlich um die Strecke H in Fig. 2 und 3 nach oben. Darüber hinaus ist die Länge L des ersten Vorsprungs 19 des Sperrgliedes 4 um so viel größer als die Länge L' des zweiten Vorsprungs 23 des Sperrgliedes 4, wie der Abstand A der ersten Schrägfläche 20 des Steuergliedes 12 und der ersten Endfläche 21 sowie der zweiten Endfläche 22 von der Drehachse 13 des Steuergliedes 12 größer ist als der Abstand A' der zweiten Schrägfläche 24 des Steuergliedes 12 und der dritten Endfläche 25 sowie der vierten Endfläche 26 von der Drehachse 13 des Steuergliedes 12.

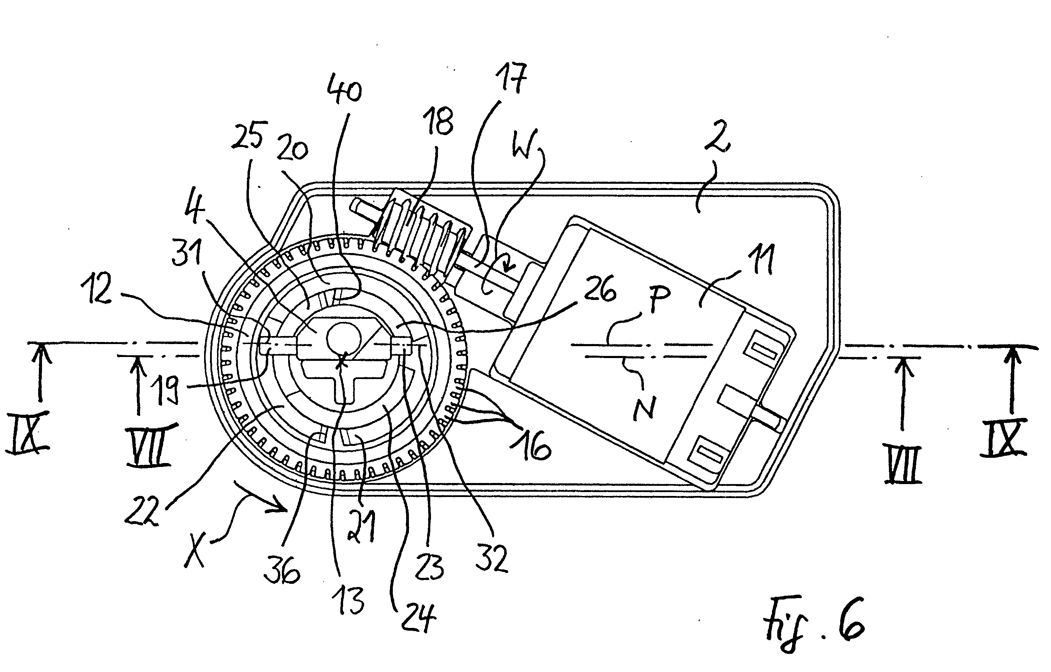

Gemäß Fig. 3 und 6 sind die Ebene P, welche die Längsachse 31 des ersten Vorsprungs 19 und die Längsachse 32 des zweiten Vorsprungs 23 des Sperrgliedes 4 enthält, und die Drehachse 13 des Steuergliedes 12 gegenseitig versetzt. Die Drehachse 13 des Steuergliedes 12 und deren Ebene N verlaufen in geringem Abstand parallel zur Ebene P.

Wie ebenfalls besonders deutlich aus Fig. 10 bis 12 hervorgeht, ist das Steuerglied 12 an dem der ersten Schrägfläche 20 fernen Ende 33 der ersten Endfläche 21 und an dem der ersten Schrägfläche 20 fernen Ende 34 der zweiten Endfläche 22 mit je einer inneren, zur Drehachse 13 des Steuergliedes 12 parallelen Anschlagfläche 35 bzw. 36 für den ersten Vorsprung 19 des Sperrgliedes 4 versehen und weist das Steuerglied 12 an dem der zweiten Schrägfläche 24 fernen Ende 37 der dritten Endfläche 25 sowie an dem der zweiten Schrägfläche 24 fernen Ende 38 der vierten Endfläche 26 je eine innere, zur Drehachse 13 des Steuergliedes 12 parallele Anschlagfläche 39 bzw. 40 für den zweiten Vorsprung 23 des Sperrgliedes 4 auf.

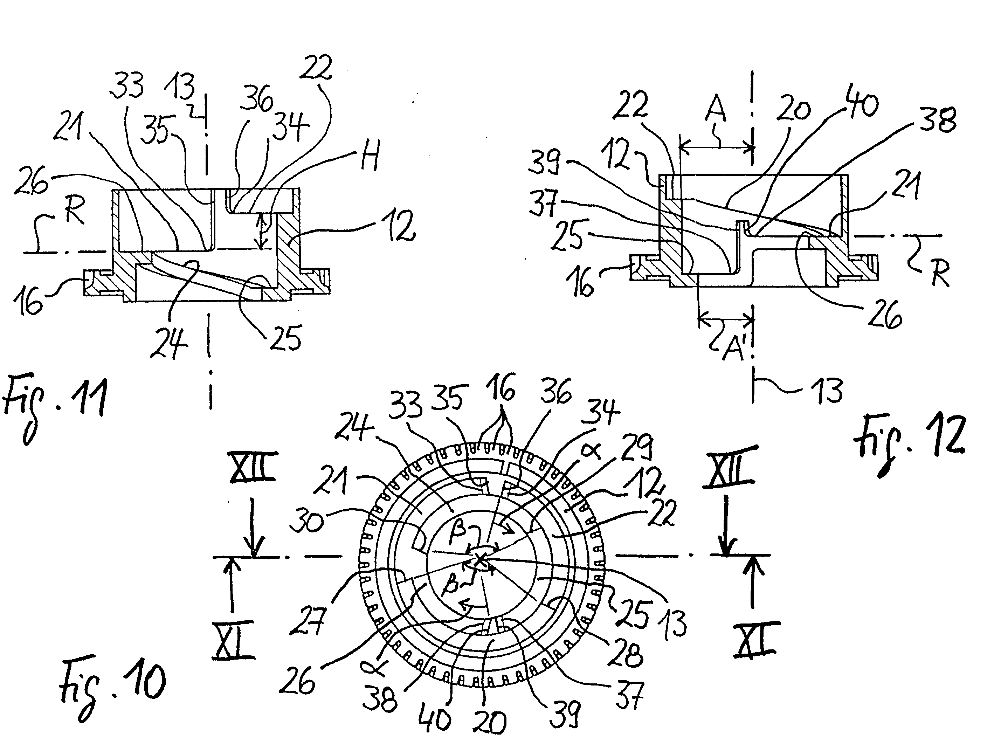

Sowohl die erste Schrägfläche 20 des Steuergliedes 12 und die erste Endfläche 21 sowie die zweite Endfläche 22 als auch die zweite Schrägfläche 24 des Steuergliedes 12 und die dritte Endfläche 25 sowie die vierte Endfläche 26 erstrecken sich gemeinsam über einen Zentriwinkel α von annähernd 360°, umschließen also die Drehachse 13 des Steuergliedes 12 fast vollständig, nämlich bis auf den minimalen Abstand der beiden Anschlagflächen 35, 36 bzw. der beiden Anschlagflächen 39, 40 voneinander. Dabei erstrecken sich sowohl die erste Schrägfläche 20 des Steuergliedes 12 und die erste Endfläche 21 sowie die zweite Endfläche 22 als auch die zweite Schrägfläche 24 des Steuergliedes 12 und die dritte Endfläche 25 sowie die vierte Endfläche 26 jeweils über einen Zentriwinkel β von etwa 120° und liegen die in Fig. 11 und 12 untere erste Endfläche 21 sowie obere vierte Endfläche 26 in derselben zur Drehachse 13 des Steuergliedes 12 senkrechten Ebene R.

Zwischen dem Sperrglied 4 und dem Deckel 1 des Gehäuses 2 ist eine Schraubendruckfeder 41 angeordnet, welche den ersten Vorsprung 19 des Sperrgliedes 4 gegen die erste Schrägfläche 20 des Steuergliedes 12 und die erste Endfläche 21 sowie die zweite Endfläche 22 drückt und den zweiten Vorsprung 23 des Sperrgliedes 4 gegen die zweite Schrägfläche 24 des Steuergliedes 12 und die dritte Endfläche 25 sowie die vierte Endfläche 26 preßt.

Wie besonders deutlich aus Fig. 9 hervorgeht, sind der erste Vorsprung 19 und der zweite Vorsprung 23 des Sperrgliedes 4 jeweils von einem zylindrischen Stift 42 bzw. 43 gebildet, der in eine zylindrische Querbohrung 44 bzw. 45 des Sperrgliedes 4 eingepreßt ist.

Bei dem Steuerglied 12 handelt es sich um ein Druckgußteil. Es läßt sich sehr wirtschaftlich aus einem geeigneten metallischen oder synthetischen Werkstoff mit einer Druckgußmaschine herstellen.

Das geschilderte Lenkschloß für Kraftfahrzeuge funktioniert folgendermaßen.

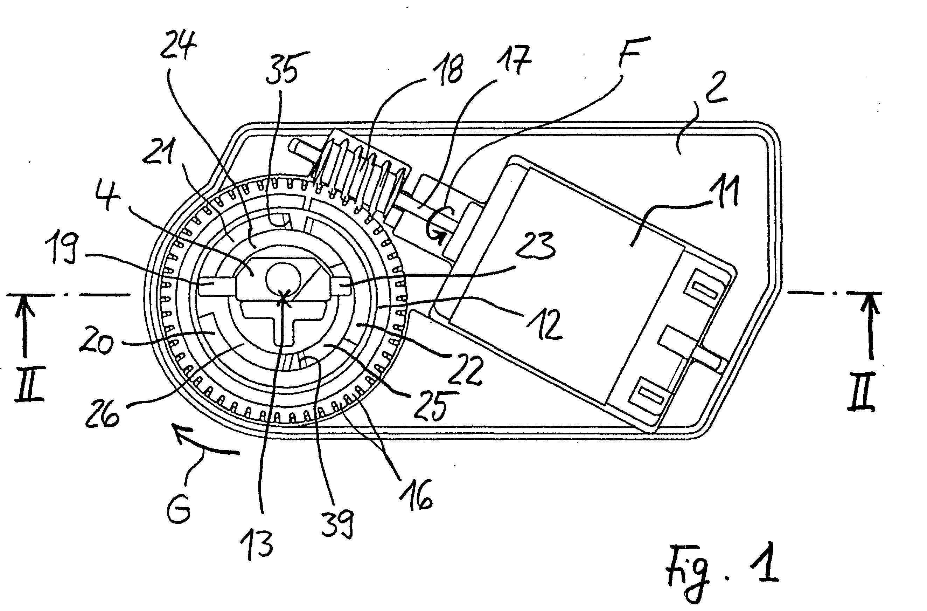

Wenn sich das Sperrglied 4 in der Verriegelungsstellung befindet, dann liegt sein erster Vorsprung 19 auf der ersten Endfläche 21 und sein zweiter Vorsprung 23 auf der dritten Endfläche 25 im Steuerglied 12 auf, wie in Fig. 1 und 2 dargestellt. Um das Sperrglied 4 entgegen der Wirkung der Schraubendruckfeder 41 aus der Verriegelungsstellung axial in Richtung des Pfeils E gemäß Fig. 2 in die Entriegelungsstellung zu verschieben, wird der Elektromotor 11 eingeschaltet, so daß er die Antriebsschnecke 18 in Richtung des Pfeils F und das Steuerglied 12 in Richtung des Pfeils G gemäß Fig. 1 dreht. Das hat zur Folge, daß die erste Endfläche 21 unter dem ersten Vorsprung 19 und die dritte Endfläche 25 unter dem zweiten Vorsprung 23 wegläuft und der erste Vorsprung 19 auf die erste Schrägfläche 20 sowie der zweite Vorsprung 23 auf die zweite Schrägfläche 24 des Steuergliedes 12 übergeht, um auf derselben zur zweiten Endfläche 22 bzw. zur vierten Endfläche 26 im Steuerglied 12 hinzulaufen. Der erste Vorsprung 19 erreicht und geht über auf die zweite Endfläche 22 und der zweite Vorsprung 23 erreicht und geht über auf die vierte Endfläche 26 in einer nicht gezeigten Drehstellung des Steuergliedes 12 kurz vor der Drehstellung, welche in Fig. 6 wiedergegeben ist. In dieser nicht gezeigten Drehstellung des Steuergliedes 12 hat das Sperrglied 4 die Entriegelungsstellung erreicht, die es auch dann beibehält, wenn das Steuerglied 12 sich in Richtung des Pfeils G in die Drehstellung gemäß Fig. 6 und darüber hinaus weiterdreht, bis die beiden Anschlagflächen 36 und 40, welche im Steuerglied 12 am Ende 34 der zweiten Endfläche 22 bzw. am Ende 38 der vierten Endfläche 26 vorgesehen sind, am ersten Vorsprung 19 bzw. am zweiten Vorsprung 23 zur Anlage kommen. Die Auslaufmöglichkeit des Steuergliedes 12 in Richtung des Pfeils G über einen Drehwinkel von etwa 120° ist im Hinblick auf die Drehung mit Sicherheit ausreichend, welche das Steuerglied 12 nach dem Abschalten des Elektromotors 11 mittels eines vom Sperrglied 4 beim Erreichen seiner Entriegelungsstellung betätigten Endschalters 46 bis zum tatsächlichen Stillstand des Elektromotors 11 noch ausführt.

Um das Sperrglied 4 unter der Wirkung der Schraubendruckfeder 41 aus der Entriegelungsstellung axial in Richtung des Pfeils V gemäß Fig. 7 in die Verriegelungsstellung laufen zu lassen, wird der Elektromotor 11 eingeschaltet, so daß er in umgekehrter Richtung umläuft und die Antriebsschnecke 18 sowie das Steuerglied 12 in der entgegengesetzten Richtung dreht, nämlich in Richtung des Pfeils W bzw. des Pfeils X in Fig. 6. Diese Axialverschiebung des Sperrglieds 4 beginnt, sobald der erste Vorsprung 19 des Sperrgliedes 4 von der zweiten Endfläche 22 auf die erste Schrägfläche 20 des Steuergliedes 12 und der zweite Vorsprung 23 des Sperrgliedes 4 von der vierten Endfläche 26 auf die zweite Schrägfläche 24 des Steuergliedes 12 läuft, und ist beendet, sobald der erste Vorsprung 19 von der ersten Schrägfläche 20 auf die erste Endfläche 21 und der zweite Vorsprung 23 von der zweiten Schrägfläche 24 auf die dritte Endfläche 25 übergegangen ist. Das Steuerglied 12 kann dann noch in Richtung des Pfeils X in die Drehstellung gemäß Fig. 1 und über dieselbe hinaus weitergedreht werden, bis die beiden Anschlagflächen 35 und 39, welche im Steuerglied 12 am Ende 33 der ersten Endfläche 21 bzw. am Ende 37 der dritten Endfläche 25 vorgesehen sind, am ersten Vorsprung 19 bzw. am zweiten Vorsprung 23 zur Anlage kommen. Die Auslaufmöglichkeit des Steuergliedes 12 in Richtung des Pfeils X über einen Drehwinkel von etwa 120° ist in Bezug auf die Drehung bei weitem ausreichend, welche das Steuerglied 12 nach dem Abschalten des Elektromotors 11 am Ende einer vorgegebenen Einschaltdauer bis zum tatsächlichen Stillstand des Elektromotors 11 noch ausführt.

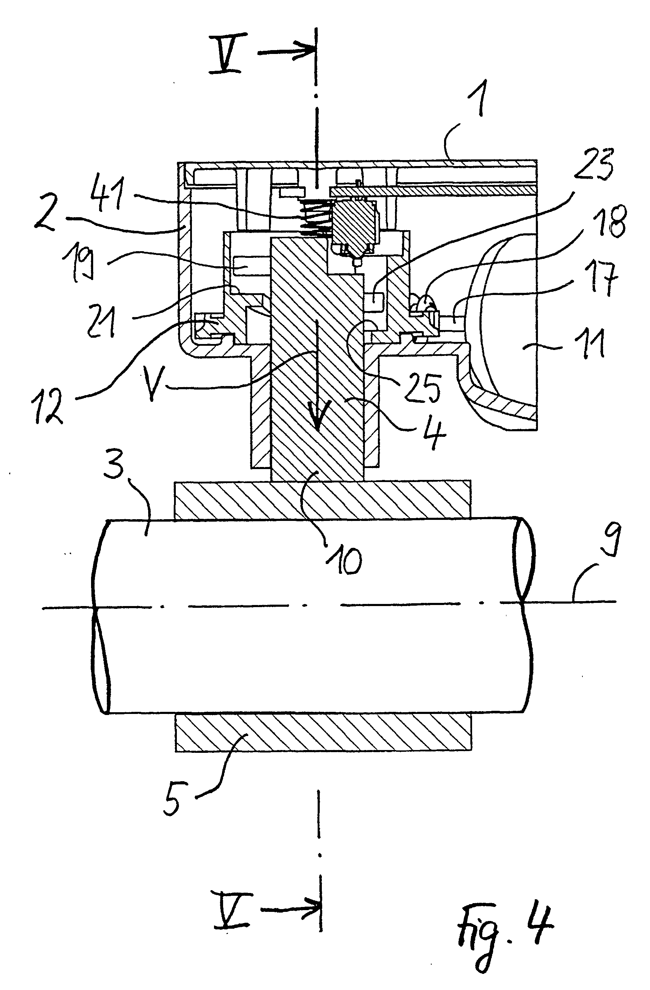

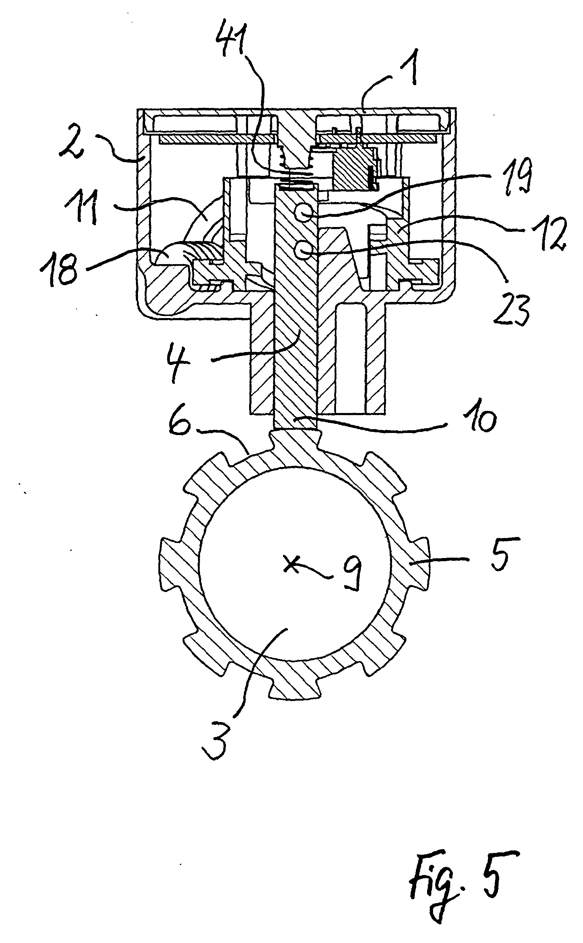

Gemäß Fig. 4 und 5 kann sich das Steuerglied 12 auch dann ungehindert in Richtung des Pfeils X in die Drehstellung nach Fig. 1 drehen, wenn dabei keine Sperrnut 6 der auf der Lenkspindel 3 sitzenden Sperrhülse 5 auf das Sperrglied 4 ausgerichtet ist, um dessen freies Ende 10 aufzunehmen. Aus der in Fig. 4 und 5 dargestellten Verriegelungswartestellung wird das Sperrglied 4 durch die Schraubendruckfeder 41 weiter in Richtung des Pfeils V gemäß Fig. 4 bewegt, um mit seinem Ende 10 in eine der beiden benachbarten Sperrnuten 6 der Sperrhülse 5 einzugreifen und die aus Fig. 2 und 3 ersichtliche Verriegelungsstellung einzunehmen, sobald die Lenkspindel 3 so gedreht worden ist, daß die Sperrnut 6 auf das Sperrglied 4 ausgerichtet ist.

## Patentansprüche

1. Schloß, insbesondere zum Verriegeln der Lenkspindel (3) eines Kraftfahrzeugs, mit einem Sperrglied (4), welches zwischen einer Verriegelungsstellung und einer Entriegelungsstellung hin- und herbewegbar ist, und mit einem mittels eines Antriebs (11) hin- und herdrehbaren Steuerglied (12) zur Axialverschiebung des Sperrgliedes (4) oder eines mit dem Sperrglied (4) zusammenwirkenden Betätigungsgliedes in der einen oder in der anderen Richtung, wobei das Steuerglied (12) das Sperrglied (4) oder dessen Betätigungsglied umschließt und zwei innere Schrägflächen (20,24) aufweist, welche mit zwei einander bezüglich der Drehachse (13) des Steuergliedes (12) diametral gegenüberliegenden, radialen Vorsprüngen (19,23) des Sperrgliedes (4) oder des Betätigungsgliedes desselben zusammenwirken und jeweils an den beiden Enden (27,28 bzw. 29,30) in je eine Endfläche ( 21 bzw. 22 bzw. 25 bzw. 26 ) übergehen, die in einer zur Drehachse (13) des Steuergliedes (12) senkrechten Ebene liegt, **dadurch gekennzeichnet, daß**
a) die eine Schrägfläche (20) des Steuergliedes (12) und deren beide Endflächen (21,22) gegenüber der anderen Schrägfläche (24) des Steuergliedes (12) und deren beiden Endflächen (25,26) in Richtung der Drehachse (13) des Steuergliedes (12) versetzt sind und sich in einem größeren Abstand (A) um die Drehachse (13) des Steuergliedes (12) herum erstrecken und
b) die beiden Vorsprünge (19,23) des Sperrgliedes (4) oder des Betätigungsgliedes desselben unbeweglich angeordnet sind, wobei derjenige Vorsprung (19), mit welchem die von der Drehachse (13) des Steuergliedes (12) weiter entfernte Schrägfläche (20) des Steuergliedes (12) und deren beide Endflächen (21,22) zusammenwirken, gegenüber demjenigen Vorsprung (23), mit welchem die andere Schrägfläche (24) des Steuergliedes (12) und deren beide Endflächen (25,26) zusammenwirken, entsprechend weit in Richtung der Drehachse (13) des Steuergliedes (12) versetzt ist und eine entsprechend größere Länge (L) aufweist.

2. Schloß nach Anspruch 1, **dadurch gekennzeichnet, daß** das Steuerglied (12) an dem der zugehörigen Schrägfläche (20;24) fernen Ende (33;34;37;38) jeder Endfläche (21;22;25;26) eine Anschlagfläche (35;36;39;40) für denjenigen Vorsprung (19;23) des Sperrgliedes (4) oder des Betätigungsgliedes desselben aufweist, mit welchem die Endfläche (21;22;25;26) zusammenwirkt.

3. Schloß nach Anspruch 1 oder 2, **dadurch gekennzeichnet, daß** jede Schrägfläche (20;24) des Steuergliedes (12) und deren beide Endflächen (21;22;25;26) sich gemeinsam über einen Zentriwinkel (α) von annähernd 360° erstrecken.

4. Schloß nach Anspruch 3, **dadurch gekennzeichnet, daß** jede Schrägfläche (20;24) des Steuergliedes (12) und jede Endfläche (21;22;25;26) jeder Schrägfläche (20;24) sich über einen Zentriwinkel (β) von etwa 120° erstreckt.

5. Schloß nach Anspruch 3 oder 4, **dadurch gekennzeichnet, daß** die beiden in Richtung der Drehachse (13) des Steuergliedes (12) einander benachbarten Endflächen (21,26) der einen Schrägfläche (20) bzw. der anderen Schrägfläche (24) des Steuergliedes (12) in derselben zur Drehachse (13) des Steuergliedes (12) senkrechten Ebene (R) liegen.

6. Schloß nach einem der vorstehenden Ansprüche, **dadurch gekennzeichnet, daß** das Steuerglied (12) hülsenförmig ausgebildet ist.

7. Schloß nach einem der vorstehenden Ansprüche, **dadurch gekennzeichnet, daß** das Steuerglied (12) eine Außenverzahnung (16) für den Eingriff eines Antriebsritzels oder einer Antriebsschnecke (18) aufweist.

8. Schloß nach einem der vorstehenden Ansprüche, **dadurch gekennzeichnet, daß** das Steuerglied (12) ein Druckgußteil ist.

9. Schloß nach einem der vorstehenden Ansprüche, **dadurch gekennzeichnet, daß** das Sperrglied (4) oder das Betätigungsglied desselben derart federbelastet ist, daß die Vorsprünge (19,23) des Sperrgliedes (4) oder des Betätigungsgliedes desselben gegen die Schrägflächen (20,24) des Steuergliedes (12) und deren Endflächen (21,22,25,26) gedrückt werden.

10. Schloß nach einem der vorstehenden Ansprüche, **dadurch gekennzeichnet, daß** die Drehachse (13) des Steuergliedes (12) und die die Längsachsen (31,32) der Vorsprünge (19,23) des Sperrgliedes (4) oder des Betätigungsgliedes desselben enthaltende Ebene (P) gegenseitig versetzt sind.

11. Schloß nach einem der vorstehenden Ansprüche, **dadurch gekennzeichnet, daß** die Vorsprünge (19,23) des Sperrgliedes (4) oder des Betätigungsgliedes desselben jeweils von einem in eine Bohrung (44;45) des Sperrgliedes (4) oder des Betätigungsgliedes eingepreßten Stift (42;43) gebildet sind.

12. Schloß nach einem der vorstehenden Ansprüche, **dadurch gekennzeichnet, daß** ein Elektromotor (11) mit umkehrbarer Drehrichtung als Antrieb für das Steuerglied (12) vorgesehen ist.

## Claims

1. Lock, in particular, for locking the steering spindle (3) of a motor vehicle, with a locking element (4), which can be displaced to and fro between a locked position and an unlocked position, and with a control element (12) rotatable to and fro by means of a drive (11) for the axial displacement of the locking element (4) or a drive element cooperating with the locking element (4) in the one or the other direction, wherein the control element (12) surrounds the locking element (4) or its drive element and has two internal bevel surfaces (20, 24), which cooperate with two radial projections (19, 23) of the locking element (4) or the associated drive element, disposed diametrically opposite to one another with reference to the axis of rotation (13) of the control element (12), and which each merge at each of the two ends (27, 28 and 29, 30 respectively), into a terminal surface (21 and 22 or 25 and 26 respectively), which is disposed in a plane perpendicular to the rotational axis (13) of the control element (12), **characterised in that**
a) the one bevel surface (20) of the control element (12) and its two terminal surfaces (21, 22) are offset in the direction along the rotational axis (13) of the control element (12) relative to the other bevel surface (24) of the control element (12) and its two terminal surfaces (25, 26), and extend around the rotational axis (13) of the control element (12) at a relatively greater distance (A) and
b) the two projections (19, 23) of the locking element (4) or the associated drive element are arranged in an immovable manner, wherein the projection (19), with which the bevel surface (20) of the control element (12) further removed from the rotational axis (13) of the control element (12) and its two terminal surfaces (21, 22) cooperate, is offset relative to the projection (23), with which the other bevel surface (24) of the control element (12) and its two terminal surfaces (25, 26) cooperate, at a corresponding distance along the direction of the rotational axis (13) of the control element (12) and has a correspondingly greater length (L).

2. Lock according to claim 1, **characterised in that** the control element (12) has a stop surface (35; 36; 39; 40) for the projection (19; 23) of the locking element (4) or the associated drive element, at the end (33; 34; 37; 38) remote from the associated bevel surface (20; 24) of each terminal surface (21; 22; 25; 26), with which the terminal surface (21; 22; 25; 26) cooperates.

3. Lock according to claim 1 or 2, **characterised in that** each bevel surface (20; 24) of the control element (12) and its two terminal surfaces (21; 22; 25; 26) extend jointly through a central angle (α) of approximately 360°.

4. Lock according to claim 3, **characterised in that** each bevel surface (20; 24) of the control element (12) and each terminal surface (21; 22; 25; 26) of each bevel surface (20; 24) extends through a central angle (β) of approximately 120°.

5. Lock according to claim 3 or 4, **characterised in that** the two terminal surfaces (21, 26) of the one bevel surface (20) and respectively of the other bevel surface (24) of the control element (12), which are mutually adjacent in the direction along the rotational axis (13) of the control element (12), are disposed in the same plane (R) perpendicular to the rotational axis (13) of the control element (12).

6. Lock according to any one of the preceding claims, **characterised in that** the control element (12) is designed in a tubular shape.

7. Lock according to any one of the preceding claims, **characterised in that** the control element (12) has external teeth (16) for the engagement of a drive pinion or a drive worm (18).

8. Lock according to any one of the preceding claims, **characterised in that** the control element (12) is a diecast part.

9. Lock according to any one of the preceding claims, **characterised in that** the locking element (4) or the associated drive element is spring loaded in such a manner that the projections (19, 23) of the locking element (4) or the associated drive element are pressed against the bevel surfaces (20, 24) of the control element (12) and their terminal surfaces (21, 22, 25, 26).

10. Lock according to any one of the preceding claims, **characterised in that** the rotational axis (13) of the control element (12) and the plane (P) containing the longitudinal axes (31, 32) of the projections (19, 23) of the locking element (4) or of the associated drive element are offset relative to one another.

11. Lock according to any one of the preceding claims, **characterised in that** the projections (19, 23) of the locking element (4) or of the associated drive element are eachformed by a pin (42; 43) force-fitted into a borehole (44; 45) of the locking element (4) or the associated drive element.

12. Lock according to any one of the preceding claims, **characterised in that** an electric motor with reversible rotational direction is provided as the drive for the control element (12).

## Revendications

1. Verrou, en particulier pour le verrouillage de l'arbre de direction (3) d'un véhicule à moteur, avec un organe de blocage (4) mobile en va-et-vient entre une position de verrouillage et une position de déverrouillage et avec un organe de commande (12) pouvant être tourné en va-et-vient au moyen d'un mécanisme entraînement (11) et servant au déplacement axial de l'organe de blocage (4) ou d'un organe d'actionnement coopérant avec l'organe de blocage (4) dans l'une ou l'autre direction, l'organe de commande (12) entourant l'organe de blocage (4) ou l'organe d'actionnement de celui-ci et présentant deux surfaces obliques intérieures (20, 24), qui coopèrent avec deux saillies radiales (19, 23) de l'organe de blocage (4) ou de son organe d'actionnement, diamétralement opposées l'une à l'autre par rapport à l'axe de rotation (13) de l'organe de commande (12) et qui se raccordent à leurs deux extrémités (27, 28 et 29, 30) respectivement à une surface d'extrémité (21 ou 22 et 25 ou 26) qui se trouve dans un plan perpendiculaire à l'axe de rotation (13) de l'organe de commande (12), **caractérisé en ce que**
a) une surface oblique (20) de l'organe de commande (12) et ses deux surfaces d'extrémité (21, 22) sont décalées par rapport à l'autre surface oblique (24) de l'organe de commande (12) et à ses deux surfaces d'extrémité (25, 26) en direction de l'axe de rotation (13) de l'organe de commande (12) et s'étendent à une plus grande distance (A) autour de l'axe de rotation (13) de l'organe de commande (12), et
b) les deux saillies (19, 23) de l'organe de blocage (4) ou de son organe d'actionnement sont disposées de manière immobile, la saillie (19) avec laquelle la surface oblique (20) de l'organe de commande (12) la plus éloignée de l'axe de rotation (13) de l'organe de commande (12) et ses deux surfaces d'extrémité (21, 22) coopèrent étant décalée par rapport à la saillie (23) avec laquelle l'autre surface oblique (24) de l'organe de commande (12) et ses deux surfaces d'extrémité (25, 26) coopèrent sur une distance correspondante dans le sens de l'axe de rotation (13) de l'organe de commande (12) et possédant une longueur (L) conformément plus grande.

2. Verrou selon la revendication 1, **caractérisé en ce que** l'organe de commande (12) présente à l'extrémité (33 ; 34 ; 37 ; 38) de chaque surface d'extrémité (21 ; 22 ; 25 ; 26) éloignée de la surface oblique (20 ; 24) correspondante une surface de butée (35 ; 36 ; 39 ; 40) pour la saillie (19, 23) de l'organe de blocage (4) ou de son organe d'actionnement avec laquelle la surface d'extrémité (21 ; 22 ; 25 ; 26) coopère.

3. Verrou selon la revendication 1 ou 2, **caractérisé en ce que** chaque surface oblique (20, 24) de l'organe de commande (12) et ses deux surfaces d'extrémité (21 ; 22 ; 25 ; 26) s'étendent ensemble sur un angle au centre (α) d'environ 360°.

4. Verrou selon la revendication 3, **caractérisé en ce que** chaque surface oblique (20 ; 24) de l'organe de commande (12) et chaque surface d'extrémité (21 ; 22 ; 25 ; 26) de chaque surface oblique (20 ; 24) s'étendent sur un angle au centre (β) d'environ 120°.

5. Verrou selon la revendication 3 ou 4, **caractérisé en ce que** les deux surfaces d'extrémité (21, 26) d'une surface oblique (20) et de l'autre surface oblique (24) de l'organe de commande (12) voisines l'une de l'autre dans le sens de l'axe de rotation (13) de l'organe de commande (12) se trouvent dans le même plan (R) perpendiculaire à l'axe de rotation (13) de l'organe de commande (12).

6. Verrou selon l'une des revendications précédentes, **caractérisé en ce que** l'organe de commande (12) est en forme de manchon.

7. Verrou selon l'une des revendications précédentes, **caractérisé en ce que** l'organe de commande (12) présente une denture extérieure (16) destinée à se mettre en prise avec un pignon d'entraînement ou une vis sans fin d'entraînement (18).

8. Verrou selon l'une des revendications précédentes, **caractérisé en ce que** l'organe de commande (12) est une pièce moulée sous pression.

9. Verrou selon l'une des revendications précédentes, **caractérisé en ce que** l'organe de blocage (4) ou son organe d'actionnement sont contraints par ressort de telle sorte que les saillies (19, 23) de l'organe de commande (4) ou de son organe d'actionnement soient poussées contre les surfaces obliques (20, 24) de l'organe de commande (12) et leurs surfaces d'extrémité (21 ; 22 ; 25 ; 26).

10. Verrou selon l'une des revendications précédentes, **caractérisé en ce que** l'axe de rotation (13) de l'organe de commande (12) et le plan (P) contenant les axes longitudinaux (31, 32) des saillies (19, 23) de l'organe de blocage (4) ou de son organe d'actionnement sont décalés l'un par rapport à l'autre.

11. Verrou selon l'une des revendications précédentes, **caractérisé en ce que** les saillies (19, 23) de l'organe de blocage (4) ou de son organe d'actionnement sont formées chacune par une goupille (42 ; 43) enfoncée dans un trou (44 ; 45) de l'organe de blocage (4) ou de son organe d'actionnement.

12. Verrou selon l'une des revendications précédentes, **caractérisé en ce qu'**il est prévu un moteur électrique (11) à rotation réversible pour l'entraînement de l'organe de commande (12).
